# EUROPÄISCHE PATENTSCHRIFT

(11) **EP 1 923 696 B1**
(45) Veröffentlichungstag und Bekanntmachung des Hinweises auf die Patenterteilung: **13.01.2010**
(21) Anmeldenummer: 06023086.9
(22) Anmeldetag: 07.11.2006
(51) Int. Cl.: G01N 21/88, B07C 5/12, G01M 13/00, G01N 3/08, G01N 19/08

(54) **Verfahren und Einrichtung zur Prüfung von flexiblen Gummi- oder Kunststoffringen**
Method and apparatus for examination of flexible rings made from rubber or synthetics
Méthode et appareil pour l'examination de bagues d'étanchéité flexibles en caoutchouc ou en matière synthétique

(43) Veröffentlichungstag der Anmeldung: 21.05.2008
(73) Patentinhaber: M.O.L. GUMMIVERARBEITUNG GMBH & Co. KG, 49377 Vechta (DE)
(72) Erfinder: Lüers, Gregor, 49424 Lutten (DE)
(74) Vertreter: Meyer, Ludgerus

(56) Entgegenhaltungen:
- EP-A- 0 384 002
- EP-A- 1 271 123
- DE-A1- 4 130 366
- DE-A1- 10 138 207

## Beschreibung

Die Erfindung betrifft ein Verfahren zur Prüfung von flexiblen Gummi- oder Kunststoffringen nach dem Oberbegriff des Anspruchs 1 sowie eine entsprechende Einrichtung nach dem Oberbegriff des Anspruchs 10.

Kanalisationsrohre, insbesondere für die Haustechnik, weisen in der Regel ein Spitzende und ein Muffenende auf, wobei in dem Muffenende eine Innennut ausgebildet ist, in die ein Gummi- oder Kunststoffring eingesetzt ist. Die meisten für diesen Zweck heute verwendeten Gummiringe sind als Lippendichtungen ausgebildet, die ein leichtes Zusammenstecken zweier Rohre ermöglichen und gleichzeitig eine gute Dichtwirkung aufweisen.

Dabei ist es wichtig, dass solche Ringe weder beschädigt sind, noch mit Fehlstellen hergestellt wurden. Bei der Herstellung ist es bisher üblich, die die Herstellungsmaschine verlassenden Ringe per Augenschein zu prüfen und fehlerhafte Ringe auszusortieren. Eine solche Prüfung ist jedoch arbeitsaufwändig und fehlerbehaftet.

In der industriellen Fertigung verschiedener Produkte ist es bekannt, hergestellte Produkte optisch zu erfassen und anhand eines fehlerfreien Musters Vergleichsanalysen durchzuführen. Ein Großteil von Fehlern lässt sich auf diese Weise festzustellen.

Aus der DE 103 33 235 ist ein Prüfverfahren bekannt geworden, bei dem derartige Rohrdichtungen über eine Sortiervorrichtung einer Prüfstation zugeführt werden, in der ordnungsgemäße von nicht ordnungsgemäßen Mustern unterschieden werden können. Die Prüfeinrichtung besteht aus einer Kamera, die einen Ring vollständig erfasst und mit einem fehlerfreien Muster vergleicht. Anstelle einer Vollbildkamera ist dort auch als weiteres Beispiel eine Zeilenkamera angegeben.

Obgleich auf diese Weise eine Grobauswahl fehlerbehafteter Ringe möglich ist, ist die Einrichtung jedoch nicht dafür geeignet, Ringe auszusortieren, deren Lippen Risse aufweisen, eine feine Gratbildung zeigen, oder wenn Fehler erst im belasteten Zustand eines Ringes in Erscheinung treten.

Eine ähnliche Einrichtung ist aus der DE 41 30 366 A1 bekannt. In dieser Druckschrift ist eine Einrichtung zur automatischen Prüfung von torusförmigen Ringen angegeben, die vier CCD-Kameras enthält, welche jeweils paarweise in gegeneinander versetzten Ebenen angeordnet sind und an welchen vorbei die zu prüfenden 0-Ringe transportiert werden. Die Ringe werden bei der Prüfung auf zwei parallel zueinander angeordnete stab- oder stiftförmige drehbare Tragdorne aufgespannt, wobei auch eine Einrichtung zum Einstellen einer definierten Dehnung der 0-Ringe vorgesehen ist.

Diese Schrift gibt nicht an, in welcher Weise die 0-Ringe der Messeinrichtung zugeführt werden. Es sind daher keine Angaben enthalten, wie und ob die Einrichtung in einen Fertigungsprozess zur Herstellung von Ringen eingefügt werden könnte.

Aus der DE 101 38 207 A1 ist eine Einrichtung zur Qualitätskontrolle von Ringen bekannt, die eine Belastungseinrichtung enthält, durch die Kräfte auf die Ringe aufgebracht werden können, indem sie zusammengedrückt und gekrümmt oder zumindest abschnittsweise mit einer erhöhten Oberflächenspannung verformt werden. Auch hierbei sind optische Sensoren vorgesehen, um stärker gekrümmte oder verformte Oberflächenabschnitte als Bild zu erfassen.

Auch die EP 1 271 123 A1 betrifft ein Verfahren und eine Vorrichtung zur Qualitätsprüfung elastischer und runder Formteile, bei der die Formteile nacheinander radial zusammengedrückt und gleichzeitig um ihre Mittelachse gedreht werden. Beim Zusammendrücken und Drehen werden sie optisch auf Risse geprüft, wobei Formteile, die keine Eigenspannung aufweisen, ausgefällt werden. Da die Formteile zwischen einer Gleitbahn und einem Bandantrieb kontinuierlich vorwärtsbewegt werden, erfordert die optische Prüfung des Formteils auf Fehler, dass das Prüfelement im Gleichlauf mit der Transportbewegung des abrollenden Formteils erfolgt. Dies erfordert einen hohen mechanischen Aufwand. Ferner ist die Genauigkeit der Fehlererfassung beschränkt, da eine Längsdehnung der Formteile nicht erfolgt und somit solche Fehlstellen des Formteils nicht erfasst werden können, die sich erst bei Dehnung des Formteils zeigen.

Ein ähnliches Zusammendrücken erfolgt beim Gegenstand der EP 0 384 002 A2, bei der jedoch durch gegenläufigen Antrieb zweier Haltebacken der 0-Ring während der Prüfung ortsfest gehalten wird. Allerdings erfolgt hier ebenfalls keine Dehnung der Ringe in Längsrichtung.

Der Erfindung liegt die Aufgabe zugrunde, ein Verfahren zur Prüfung von flexiblen Gummi- oder Kunststoffringen, insbesondere Dichtungen für Kanalisationsrohre, auf Fehlerfreiheit anzugeben, mit dem auch Fehler an Ringen ermittelt werden können, die durch einfachen optischen Vergleich zweier Muster nicht festgestellt werden können.

Der Erfindung liegt ferner die Aufgabe zu Grunde, eine Einrichtung zur Prüfung von flexiblen Gummi- oder Kunststoffringen anzugeben, die eine automatische genaue Erfassung der sichtbaren Eigenschaften eines Ringes ermöglicht.

Diese Aufgabe wird durch die in den Ansprüchen 1 und 10 angegebene Erfindung gelöst. Vorteilhafte Weiterbildungen der Erfindung sind in Unteransprüchen angegeben.

Gemäß dem erfindungsgemäßen Verfahren werden die zu prüfenden Ringe während der Prüfung mechanisch in Umfangsrichtung gestreckt, so dass Fehlstellen der Ringe wie z.B. Risse, feine Grate und ähnliches leicht erfasst werden können. Wenn in dem gestreckten Zustand der Ringe keine Fehler festgestellt wurden, treten mit hoher Wahrscheinlichkeit im eingebauten Zustand der Ringe auch keine Fehler auf.

Die Streckung der Ringe erfolgt über zwei in die Ringebene einführbare und auseinander bewegbare Dehnelemente, die als Rollen ausgeführt sind, wobei die Prüfung der Ringe im Bereich der die Rollen verbindenden Tangentiallinien erfolgt. Da die Prüfeinrichtung vorzugsweise stationär angeordnet ist, werden die Rollen dazu verwendet, die Ringe während ihrer Streckung anzutreiben, um so den gesamten Umfang der Ringe in der Prüfeinrichtung erfassen zu können.

Alternativ kann auch eine entlang des Umfangs der Ringe umlaufende Prüfeinrichtung verwendet werden, wobei die Ringe beispielsweise zunächst in einer Richtung durch zwei Dehnelemente gedehnt werden und anschließend nach Prüfung der ersten beiden Umfangsstrecken durch zwei weitere Dehnelemente in Querrichtung unter Wegnahme der ersten Dehnelemente gestreckt werden, so dass der verbleibende Umfangsbereich geprüft werden kann.

Es ist jedoch bevorzugt, die Prüfung der Ringe während des Umlaufs der Ringe um zwei Rollen durchzuführen.

Die Prüfung der Ringe kann durch optischen Vergleich der Kontur des zu prüfenden Ringes mit einer fehlerfreien Mustervorlage erfolgen. Dabei werden Fehlstellen des Ringes durch Erfassung von Streulicht am Rand eines Ringes festgestellt.

In einer bevorzugten Ausführungsform ist die Prüfeinrichtung mit einem Laser versehen, dessen Strahl auf den Gummi- oder Kunststoffring gerichtet ist, wobei die Koordinaten der Reflexion des Laserstrahls erfasst und ausgewertet werden. Der Laserstrahl wird insbesondere als aufgefächerter Linienstrahl quer über den Ring geführt. Der reflektierte Fächerstrahl wird über eine Fokussiereinrichtung auf eine Matrixempfangseinrichtung gerichtet, über die in x-y-Koordinaten ein Oberflächenbild der Kontur des Ringes an einer Umfangsstelle erhältlich ist. Sobald das Abbild eines Ringes Fehlerstellen zeigt, die im x-y-Abbild außerhalb eines Toleranzrahmens liegen, wird der entsprechende Ring als fehlerhaft betrachtet. Durch ein dadurch ausgelöstes Steuersignal lässt sich der Ring anschließend aus dem Fertigungslauf ausschließen.

Eine Einrichtung zur Prüfung von flexiblen Gummi- oder Kunststoffringen enthält eine Führungsbahn, auf der die Gummi- oder Kunststoffringe einzeln an der optischen Prüfeinrichtung vorbeigeführt werden, die die Eigenschaften des Gummi- oder Kunststoffringes optisch erfasst. Die Führungsbahn enthält dazu zwei in den Lauf des Ringes einführbare Dehnelemente, die in den Innenbereich des Ringes eintreten und derart auseinanderbewegbar sind, dass der Ring in Umfangsrichtung um ein bestimmtes Maß gestreckt wird, wobei die Prüfeinrichtung die Eigenschaften des Ringes im gestreckten Zustand optisch erfasst, um Fehlstellen des Ringes festzustellen.

Die Prüfung der Ringe kann daher auf einer einspurigen Führungsbahn erfolgen, auf der die Ringe nacheinander transportiert werden. Der jeweils zu prüfende Ring wird so auseinander gezogen, dass der Ring um ein gewisses Maß gestreckt ist. Die Streckung erfolgt über auseinander bewegbare Rollen, von denen wenigstens eine angetrieben ist, so dass bei einer feststehenden Prüfeinrichtung eine Prüfung der Ringe entlang des gesamten Umfangs durchgeführt werden kann. Um eine besonders genaue Streckung der Ringe zu erhalten, können beide Rollen der Dehnelemente synchron angetrieben sein.

Die Rollen befinden sich insbesondere auf spiegelsymmetrisch in die Führungsbahn einführbaren Hebeln, die synchron betätigbar sind. Die Hebel sind der Führungsbahn insbesondere derart zugeordnet, dass die an ihnen befestigten Rollen im Ruhezustand unterhalb der Führungsbahn liegen. Sobald sich ein Ring über dem Rollenpaar befindet, werden die Hebel mit den Rollen in die Führungsbahn in Arbeitsstellung bewegt. Gleichzeitig mit der Bewegung der Hebel in die Führungsbahn werden die Rollen parallel zur Führungsbahnrichtung auseinander bewegt, um die Ringe in der Arbeitsstellung in gestrecktem Zustand prüfen zu können. In dem Zustand, in dem die Rollen sich unterhalb der Führungsbahn in Ruhezustand befinden, stehen die gegenüberstehenden Hebelenden in einem Achsabstand zueinander, der kleiner als der Innendurchmesser eines zu prüfenden Ringes abzüglich des Durchmessers der Rollen ist. Dadurch können die Rollen beim Hochschwenken der Hebel in das Innere eines Ringes eingreifen und bei weiterem Hochbewegen der Hebel das Rollenpaar auseinanderdrücken, so dass das Rollenpaar einen Ring erfasst und bei weiterem Hochschwenken in die Arbeitsposition des Ringes streckt.

Alternativ kann das Erfassen und Strecken der Ringe auch in zwei Schritten durchgeführt werden, indem zwei Rollen, die sich unterhalb der Führungsbahn befinden, in kleinem Abstand zueinander aufwärts bewegt werden und nach Erfassung eines Ringes in einem zweiten Schritt horizontal auseinander bewegt werden.

Die Querschnittsform der Rollen ist vorzugsweise an den Querschnitt der Ringe angepasst, um eine verbesserte Führung der Ringe durch die Rollen zu ermöglichen.

Damit die Ringe bereits von den Hebeln erfasst werden können, bevor sie von den sich auseinander bewegenden Rollen erfasst werden, weisen die Hebel vorzugsweise Führungsanschläge auf, die die Ringe während der Verschwenkung der Hebel so lange führen, bis sie von den Rollen erfasst werden.

Um als fehlerhaft festgestellte Ringe von der Führungsbahn auszusondern, ist die Führungsbahn stromabwärts der Hebel vorzugsweise mit einer Ausstoßvorrichtung versehen, die fehlerhafte Ringe seitlich von der Führungsbahn abwirft.

Zugleich mit der Vereinzelung der der Prüfeinrichtung zugeführten Ringe kann stromaufwärts der Prüfeinrichtung eine Stoppvorrichtung vorgesehen sein, die zugeführte Ringe so lange zurückhält, bis die Prüfung eines Ringes abgeschlossen ist.

Mit der erfindungsgemäßen Einrichtung und dem erfindungsgemäßen Verfahren ist die Prüfung von Gummi- oder Kunststoffringen unterschiedlicher Größe und Struktur möglich, und zwar in einem belasteten Zustand der Ringe. Damit wird die Gefahr fehlerhaft in Kanalisationsstränge eingebauter Ringe erheblich verringert, so dass die möglichen Schadenskosten, die durch Fehlfunktion von Ringen verursacht werden, erheblich verringert werden können.

Die Erfindung wird nachstehend anhand eines Ausführungsbeispiels näher erläutert.

Es zeigen:
- Fig. 1: eine Führungsbahn mit Prüfeinrichtung in Aufsicht
- Fig. 2: eine Führungsbahn mit Prüfeinrichtung in Ruhestellung
- Fig. 3: eine Führungsbahn mit Prüfeinrichtung in einer Zwischenstellung
- Fig. 4: eine Führungsbahn mit Prüfeinrichtung in Arbeitsstellung
- Fig. 5: eine Schemaansicht einer Prüfeinrichtung
- Fig. 6: ein x-y-Diagramm für einen fehlerfreien Ring
- Fig. 7: ein x-y-Diagramm für einen fehlerbehafteten Ring.

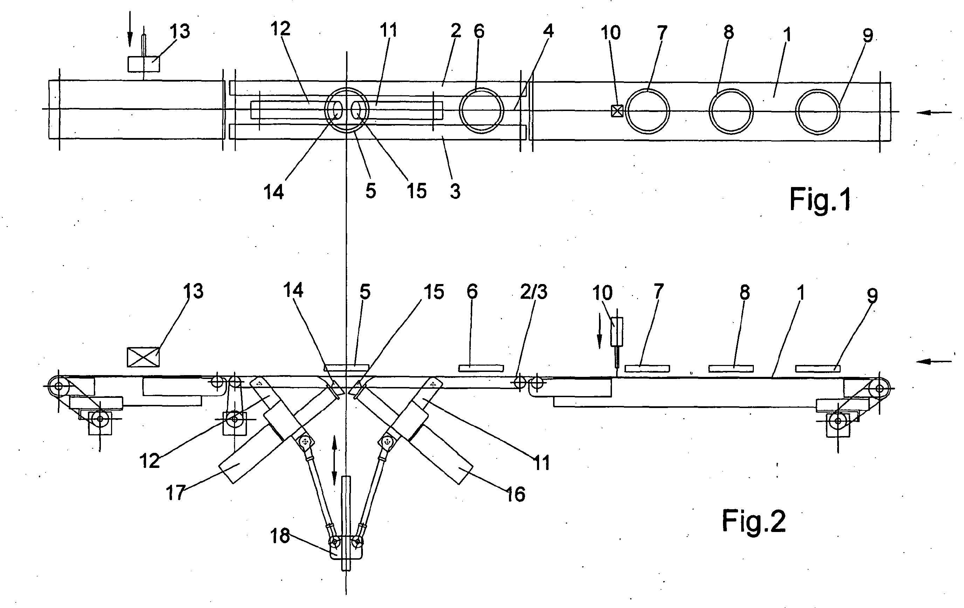

In Figur 1 ist eine Aufsicht auf eine erfindungsgemäße Einrichtung dargestellt. Auf der Führungsbahn 1, die als ein endloses Förderband ausgebildet ist, werden Gummiringe 7, 8, 9 in Reihe hintereinander gefördert. Die Ringe können unmittelbar aus dem Produktionsprozess abgegeben sein, sie können jedoch auch weiteren Verarbeitungsschritten entnommen sein. Der Führungsbahn 1 folgt eine weitere Führungsbahn, die aus zwei Transportbändern 2 und 3 gebildet ist, die einen Abstand aufweisen, der einen Freiraum 4 zwischen den Transportbändern 2 und 3 definiert. Dadurch werden die Ringe 5 und 6 auf dieser Führungsbahn lediglich auf ihren äußeren gegenüberliegenden Stellen gehalten und transportiert. Zwischen der Führungsbahn 1 und den Transportbändern 2 und 3 ist ein kleiner Abstand ausgebildet, in den ein Stopper 10 eingefügt sein kann, der beim Hochfahren den Weitertransport der Ringe 7, 8, 9 stoppt und damit in der Lage ist, nur einzelne Ringe auf die Transportbänder 2 und 3 gelangen zu lassen. Dadurch lässt sich eine Vereinzelung der auf die Führungsbahn 1 zugeführten Ringe bewirken. Eine andere Möglichkeit der Vereinzelung der Ringe besteht darin, die Führungsbahn 1 mit kleinerer Geschwindigkeit als die Transportbänder 2 und 3 anzutreiben, so dass durch schnelleren Abtransport der Ringe über die Transportbänder 2 und 3 ein Abstand zwischen aufeinanderfolgenden Ringen entsteht.

In dem Freiraum 4 sind zwei L-förmige Hebel 11 und 12 angeordnet, die parallel zu den Transportachsen der Transportbänder 2 und 3 nach oben und unten verschwenkt werden können. Sie sind spiegelsymmetrisch gelagert und enthalten an ihren gegenüberliegenden Enden zwei Rollen 14 und 15, die im Ruhezustand unterhalb der Führungsebene der Transportbänder 2 und 3 liegen. Auf den Transportbändern 2, 3 zugeführte Ringe, wie im Beispiel der Ring 5, werden über eine nicht dargestellte Stoppeinrichtung oberhalb der Hebel 11, 12 an einer Stelle angehalten, an der sich die Rollen 14 und 15, die an den Hebeln 11 und 12 angebracht sind, unterhalb des Innenbereichs des Ringes 5 befinden. Beim Hochschwenken der Hebel 11, 12 treten die Rollen 14, 15 dann in die Ringebene des Ringes 5 ein und heben den Ring beim weiteren Ausfahren der Hebel in die Arbeitsstellung an. Dabei werden sie, wie in den nachfolgenden Zeichnungen dargestellt, auseinanderbewegt, so dass der Ring 5 gestreckt wird. In diesem Zustand erfolgt die Prüfung des Ringes auf Fehler. Bei Rückkehr in die Ausgangsstellung der Hebel 11, 12 wird der Ring 5 freigegeben und kann von den Transportbändern 2, 3 weitertransportiert werden. Für den Fall, dass im Laufe der Prüfung ein Fehler des Ringes 5 festgestellt wird, sorgt ein stromabwärts der Prüfeinrichtung angeordneter Auswerfer 13 dafür, dass der fehlerhafte Ring von den Transportbändern 2, 3 abgeworfen wird, und als Ausschuss betrachtet wird. Der Auswerfer 13 kann mechanisch betätigt werden, es kann jedoch auch ein pneumatischer Auswurf vorgesehen sein.

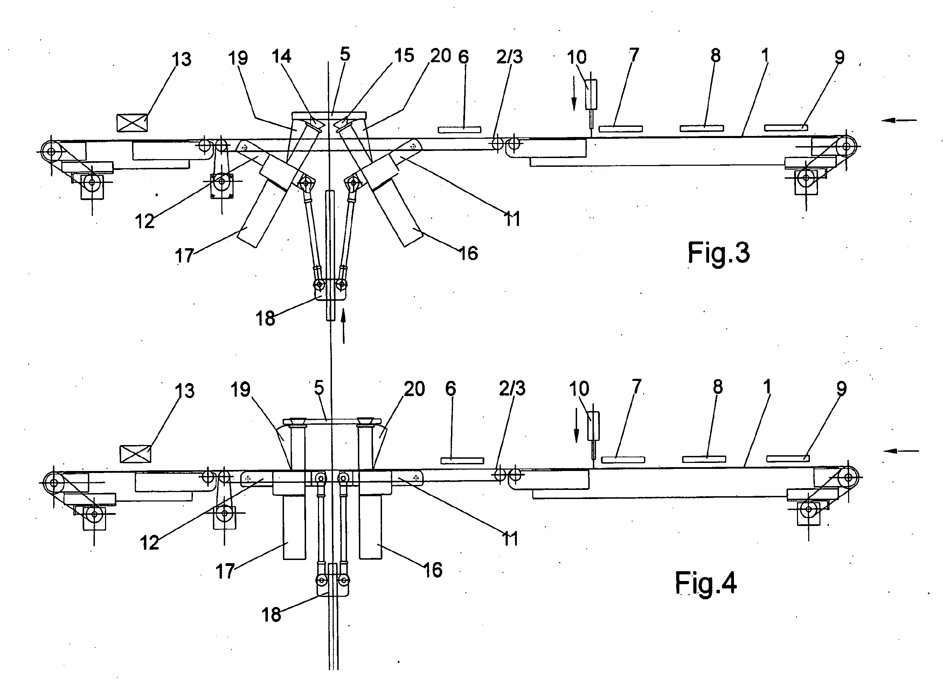

Figur 2 zeigt die erfindungsgemäße Einrichtung in Seitenansicht in Ruhestellung, Figur 3 zeigt eine Seitenansicht der Prüfeinrichtung in einer Zwischenstellung, Figur 4 zeigt eine entsprechende Ansicht in Arbeitsstellung.

Die Hebel 11, 12 sind in der Ruhestellung so angeordnet, dass in dieser Stellung sich die Rollen 14, 15 unterhalb der Bewegungsebene der Ringe 5, 6 befinden. Die Hebel sind als L-förmige Winkelhebel ausgeführt, wobei ihre langen Schenkel im Freiraum 4 parallel zu den Rollenachsen der Transportbänder 2, 3 endseitig gelagert sind. An den stirnseitigen Enden der nach oben gerichteten kurzen Schenkel der Hebel 11 und 12 sind die Rollen 14, 15 drehbar gelagert. Sie werden jeweils durch Antriebe 16 und 17 in Drehung versetzt, die sich gegenüber den Stirnseiten der kurzen Schenkel befinden und beim Verschwenken der Hebel 11, 12 ebenfalls mit verschwenken.

Die Hebel 11,12 sind spiegelsymmetrisch gelagert und sind über ein Gestänge mit einer Hubvorrichtung 18 verbunden. Das Verschwenken der Hebel 11, 12 kann daher mittels der Hubvorrichtung 18 synchron ausgelöst werden.

Durch Anheben der Hubvorrichtung 18 werden die Hebel 11, 12 um ihre Lager verschwenkt. Figur 3 zeigt eine entsprechende Zwischenstellung des Hubvorgangs, in der die Rollen 14, 15 in den inneren freien Raum eines Ringes 5 eingetreten sind und den Ring etwas angehoben haben. Da in dieser Stellung die Rollen 14, 15 den Ring 5 noch nicht selbst erfassen können, dienen Führungsanschläge 19 und 20, die an den Rückseiten der kurzen Schenkel der Hebel 11 und 12 angeordnet sind, dazu, den Ring 5 zu unterstützen. Die Führungsanschläge 19, 20 sind im Wesentlichen dreieckigförmige Erweiterungen der kurzen Schenkel der Hebel 11, 12. Durch eine entsprechende Gestaltung der Hebel 11 und 12 können auch die Schenkel selbst die Funktion der Unterstützung der Ringe einnehmen.

Figur 4 zeigt die Arbeitsstellung der Hebel 11, 12, in der die kurzen Schenkel der Hebel 11, 12 im Wesentlichen vertikal gerichtet sind und die langen Schenkel der Hebel 11, 12 in horizontaler Richtung zwischen den Transportbändern 2, 3 liegen. In diesem Zustand sind die Rollen 14, 15 , die während des Hubvorgangs im Bogen auseinandergeführt wurden, so weit auseinandergezogen, dass ein von den Rollen erfasster Ring unter Spannung gesetzt ist, und dabei um etwa 10 bis 30% gestreckt wird. In diesem Zustand kann die Prüfung des Ringes auf Fehlerfreiheit erfolgen.

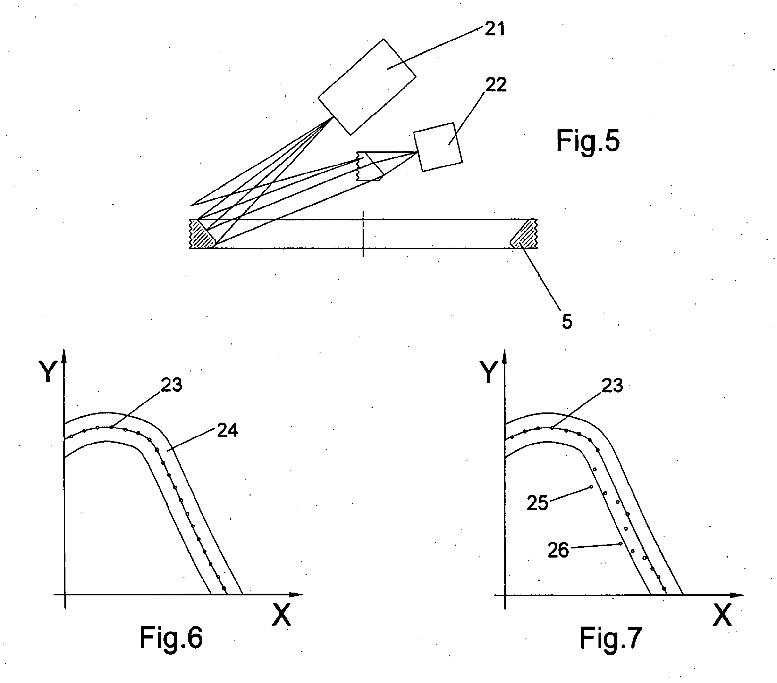

Figur 5 zeigt das Prinzip der Prüfung eines Ringes mittels eines Lasers 21, der einen aufgefächerten Linearstrahl schräg auf die Innenseite des Ringes, der in diesem Fall als Lippenring ausgebildet ist, richtet. Über eine optische Abbildungseinrichtung wird der von der Oberfläche des Ringes reflektierte Laserstrahl von einem Matrixempfänger 22 empfangen.

Der Laserstrahl arbeitet vorzugsweise nach dem Prinzip der optischen Triangulation. Über eine Linienoptik wird eine Laserlinie auf die Messobjektoberfläche projiziert. Das diffus reflektierte Licht dieser Laserlinie wird über eine Fokussieroptik auf eine Zielmessmatrix abgebildet und zweidimensional ausgewertet. Auf diese Weise kann nicht nur der Abstand eines reflektierten Punktes erfasst werden, sondern auch seine exakte Position. Bei einer Lippendichtung bedeutet dies, dass beispielsweise im Fall eines Grats am Lippenrand der Dichtung die erfasste Oberflächenstruktur den entsprechenden Grat darstellt. Bei einem Riss in der Oberfläche der Lippendichtung würde ein Reflexionspunkt, sofern überhaupt vorhanden, außerhalb des Toleranzfensters auftreten und damit entsprechend die Fehlstelle erkennbar sein.

Figur 6 zeigt eine Oberflächenkontur 23 in Form einer Folge einzelner Abtastpunkte eines bestimmten Umfangsortes eines zu prüfenden Ringes. Die einzelnen Messpunkte befinden sich innerhalb eines Toleranzfensters 24, so dass der dargestellte Messort als fehlerfrei betrachtet werden kann.

Figur 7 zeigt eine Darstellung entsprechend Figur 6, wobei zwei Messpunkte 25 und 26 außerhalb des Toleranzfensters 24 liegen. Die Darstellung zeigt damit einen fehlerhaften Dichtungsring. Die Fehlstellen führen zur Abgabe eines entsprechenden Steuersignals an die Auswurfeinrichtung 13, die den fehlerhaften Ring von den Transportbändern 2, 3 abwirft.

Die Prüfeinrichtung ist so ausgerichtet, dass entlang des Umfangs eines Dichtringes jeweils im Abstand von 0, 1 mm eine Abtastlinie erzeugt und ausgewertet werden. Je nach Durchmesser eines Ringes ergibt sich eine entsprechend hohe Anzahl von Abtastlinien. Entlang der Oberfläche des Ringes, d.h. in radialer Richtung des Ringes, werden etwa 2000 Abtastwerte an jedem Messort festgestellt. Dadurch ergibt sich eine sehr hohe Genauigkeit der Messung, so dass eine hohe Sicherheit besteht, dass fehlerhafte Ringe aussortiert werden können.

Durch die erfindungsgemäße Einrichtung lässt sich eine vollautomatische Aussortierung fehlerhafter Ringe erreichen. Eine manuelle Nachkontrolle ist nicht erforderlich.

Obgleich die erfindungsgemäße Einrichtung und das erfindungsgemäße Verfahren unter Verwendung einer optischen Reflexionsmessmethode beschrieben sind, ist die Erfindung auch für andere Messprinzipien beispielsweise Ultraschallmessung, Magnetfeldmessung oder ähnliche berührungslose Prinzipien verwendbar.

### Bezugszeichen

- 1: Führungsbahn
- 2: Transportband
- 3: Transportband
- 4: Freiraum
- 5: Ring
- 6: Ring
- 7: Ring
- 8: Ring
- 9: Ring
- 10: Stopper
- 11: Hebel
- 12: Hebel
- 13: Auswerfer
- 14: Rolle
- 15: Rolle
- 16: Antrieb
- 17: Antrieb
- 18: Hubvorrichtung
- 19: Führungsanschlag
- 20: Führungsanschlag
- 21: Laser
- 22: Empfänger
- 23: Kontur
- 24: Toleranzbereich
- 25: Fehlstelle
- 26: Fehlstelle

## Patentansprüche

1. Verfahren zur Prüfung von flexiblen Gummi- oder Kunststoffringen, insbesondere Dichtungen für Kanalisationsrohre, auf Fehlerfreiheit, bei dem die Ringe (5-9) einzeln während der Prüfung an einer optischen Prüfeinrichtung vorbeigeführt werden, wobei die Ringe mechanisch gestreckt werden, **dadurch gekennzeichnet, dass** die auf einer Führungsbahn (2, 3) an der Prüfeinrichtung vorbeigeführten Ringe zur Prüfung durch zwei in die Ringebene einführbare und auseinander bewegbare Dehnelemente von der Führungsbahn (2, 3) abgehoben und gestreckt werden, wobei die Dehnelemente Rollen (14, 15) sind und die Prüfung der Ringe im Bereich der die Rollen verbindenden Tangentiallinien erfolgt.

2. Verfahren nach Anspruch 1, **dadurch gekennzeichnet, dass** wenigstens eine der Rollen angetrieben ist, und dass die Prüfung der Ringe während des Umlaufs der Ringe um die Rollen durchgeführt wird.

3. Verfahren nach Anspruch 1, **dadurch gekennzeichnet, dass** zwei erste Dehnelemente in einer ersten Streckrichtung auseinander bewegbar sind, und dass zwei zweite Dehnelemente vorgesehen sind, die quer zur ersten Streckrichtung bewegbar sind derart, dass bei aufeinanderfolgender Streckung in erster und zweiter Dehnrichtung der gesamte Umfang der Ringe prüfbar ist.

4. Verfahren nach Anspruch 1, **dadurch gekennzeichnet, dass** die Prüfung der Ringe durch optischen Vergleich eines zu prüfenden Ringes mit einer fehlerfreien Mustervorlage erfolgt.

5. Verfahren nach Anspruch 1, **dadurch gekennzeichnet, dass** die Prüfung der Ringe durch Feststellen des Auftretens von Streulicht an Fehlerstellen eines Ringes erfolgt.

6. Verfahren nach einem der vorhergehenden Ansprüche, **dadurch gekennzeichnet, dass** durch die Prüfeinrichtung ein Laserstrahl auf die Gummi- oder Kunststoffringe gerichtet wird und dass die Koordinaten des Ortes der Reflexion des Laserstrahls erfasst und ausgewertet werden.

7. Verfahren nach Anspruch 6, **dadurch gekennzeichnet, dass** der Laserstrahl als Linienstrahl quer über die Gummi- oder Kunststoffringe geführt wird, und dass der reflektierte Laserstrahl erfasst und als Abbild der Oberflächenkontur der Gummi- oder Kunststoffringe gespeichert und/oder dargestellt wird.

8. Verfahren nach Anspruch 6 oder 7, **dadurch gekennzeichnet, dass** bei Abweichung der Koordinaten des Ortes der Reflexion von einem vorgegebenen Sollwert ein Steuersignal ausgelöst wird, das zur Aussonderung des entsprechend erfassten Gummi- oder Kunststoffringes verwendet wird.

9. Verfahren nach Anspruch 1, **dadurch gekennzeichnet, dass** die Ringe während der Prüfung um 10 - 30% in ihrer Umfangslänge gestreckt werden.

10. Einrichtung zur Prüfung von flexiblen Gummi- oder Kunststoffringen, insbesondere Dichtungen für Kanalisationsrohre, auf Fehlerfreiheit, wobei die Gummi- oder Kunststoffringe (5-9) einzeln an einer optischen Prüfeinrichtung vorbeigeführt werden, die die Eigenschaften eines Gummi- oder Kunststoffringes optisch erfasst, wobei die Ringe mechanisch in Längsrichtung gestreckt werden, **dadurch gekennzeichnet, dass** die Ringe auf einer Führungsbahn (2, 3) geführt werden, dass der Führungsbahn (2, 3) wenigstens zwei in den Lauf der Ringe einführbare Dehnelemente zugeordnet sind und dass die Dehnelemente Rollen (14,15) sind, die von der Führungsbahn her in den Innenbereich eines Ringes einführbar und derart auseinanderbewegbar sind, dass die Ringe von der Führungsbahn abgehoben und in Längsrichtung um ein bestimmtes Maß gestreckt werden, wobei die Prüfeinrichtung die Eigenschaften der Ringe im gestreckten Zustand optisch erfasst, um Fehlstellen des Ringes festzustellen.

11. Einrichtung nach Anspruch 10, **dadurch gekennzeichnet, dass** wenigstens eine Rolle der Dehnelemente während der Prüfung der Ringe angetrieben ist, um bei feststehender Prüfeinrichtung eine Prüfung der Ringe entlang ihres gesamten Umfangs durchzuführen.

12. Einrichtung nach Anspruch 10, **dadurch gekennzeichnet, dass** die Rollen (14, 15) auf jeweils einem in die Führungsbahn einführbaren Hebel (11, 12) angeordnet sind, wobei die Hebel synchron betätigbar sind.

13. Einrichtung nach Anspruch 12, **dadurch gekennzeichnet, dass** die Hebel derart angeordnet sind, dass die an ihnen befestigten Rollen im Ruhezustand unterhalb der Führungsbahn liegen, und dass die Hebel (11, 12) mit den Rollen (14, 15) in die Führungsbahn in Arbeitsstellung bewegbar sind, sobald sich ein Ring über dem Rollenpaar befindet, wobei mit der Bewegung der Hebel (11, 12) in die Führungsbahn die Rollen parallel zur Führungsbahnrichtung auseinanderbewegbar sind, um die Ringe in der Arbeitsstellung im gestreckten Zustand zu prüfen.

14. Einrichtung nach Anspruch 13, **dadurch gekennzeichnet, dass** die Hebel (11, 12), an deren Enden sich jeweils eine Rolle (14, 15) befindet, spiegelsymmetrisch zueinander gelagert sind, wobei die mit gleichem Durchmesser versehenen Rollen in der Ruhestellung der Hebel in einem Achsabstand zueinander stehen, der kleiner als der Innendurchmesser eines zu prüfenden Ringes abzüglich des Durchmessers der Rollen ist, und dass beim Hochschwenken der Hebel ein sich über dem Rollenpaar befindlicher Ring durch das Rollenpaar erfasst und beim weiteren Hochschwenken der Hebel in die Arbeitsposition gestreckt wird.

15. Einrichtung nach Anspruch 14, **dadurch gekennzeichnet, dass** die Rollen eine kegelige, der Querschnittsform der zu prüfenden Ringe angepasste Außenstruktur aufweisen.

16. Einrichtung nach Anspruch 14, **dadurch gekennzeichnet, dass** die Hebel je einen Führungsanschlag (19, 20) zur Mitnahme eines Ringes während der Verschwenkung der Hebel aufweisen, bevor der Ring von der Außenstruktur der Rollen erfasst wird.

17. Einrichtung nach einem der vorhergehenden Ansprüche 10 - 16, **dadurch gekennzeichnet, dass** der Führungsbahn stromabwärts der Hebel eine Ausstoßvorrichtung (13) zur Aussonderung von Ringen, die durch die Prüfeinrichtung als fehlerhaft festgestellt werden, zugeordnet ist.

18. Einrichtung nach einem der vorhergehenden Ansprüche 10 - 17, **dadurch gekennzeichnet, dass** die Führungsbahn stromaufwärts eine Stoppvorrichtung (10) zur Vereinzelung der der Prüfeinrichtung nacheinander zugeführten Ringe zugeordnet ist.

## Claims

1. Method for examination of flexible rubber or plastics rings, in particular seals for sewer pipes, to ensure lack of defects, wherein the rings (5-9) are individually conveyed past an optical examination device during the examination, the rings being mechanically extended, **characterised in that** the rings which are conveyed past the examination device on a guiding path (2, 3) are raised from the guiding path (2, 3) for examination and extended by means of two extension elements which can be introduced in the ring plane and which can be moved apart from each other, the extension elements being rollers (14, 15) and the examination of the rings being carried out in the region of the tangential lines which connect the rollers.

2. Method according to claim 1, **characterised in that** at least one of the rollers is driven, and **in that** the examination of the rings is carried out whilst the rings move around the rollers.

3. Method according to claim 1, **characterised in that** two first extension elements can be moved apart in a first extension direction, and **in that** two second extension elements are provided which can be moved transversely relative to the first extension direction in such a manner that, in the case of sequential extension in the first and second extension direction, the entire periphery of the rings can be examined.

4. Method according to claim 1, **characterised in that** the examination of the rings is carried out by optically comparing a ring to be examined with a defect-free template.

5. Method according to claim 1, **characterised in that** the examination of the rings is carried out by establishing the occurrence of scatter light at defective locations of a ring.

6. Method according to any one of the preceding claims, **characterised in that** a laser beam is directed onto the rubber or plastics rings by the examination device and **in that** the co-ordinates of the location of the reflection of the laser beam are established and evaluated.

7. Method according to claim 6, **characterised in that** the laser beam is guided as a linear beam transversely over the rubber or plastics rings, and **in that** the reflected laser beam is detected and stored and/or displayed as an image of the surface contour of the rubber or plastics rings.

8. Method according to claim 6 or claim 7, **characterised in that**, when the co-ordinates of the location of the reflection differ from a predetermined desired value, a control signal is actuated which is used to separate the rubber or plastics ring which has accordingly been detected.

9. Method according to claim 1, **characterised in that** the rings are extended by from 10 to 30% in terms of their peripheral length during the examination.

10. Device for examination of flexible rubber or plastics rings, in particular seals for sewer pipes, to ensure lack of defects, the rubber or plastics rings (5-9) being individually conveyed past an optical examination device, which optically detects the properties of a rubber or plastics ring, the rings being mechanically extended in the longitudinal direction, **characterised in that** the rings are guided on a guiding path (2, 3), **in that** at least two extension elements which can be introduced into the path of the rings are associated with the guiding path (2, 3), and **in that** the extension elements are rollers (14, 15) which can be introduced from the guiding path into the inner region of a ring and can be moved apart in such a manner that the rings are raised from the guiding path and extended by a specific amount in the longitudinal direction, the examination device optically detecting the properties of the rings in the extended state in order to determine locations of defects of the ring.

11. Device according to claim 10, **characterised in that** at least one roller of the extension elements is driven during the examination of the rings in order to carry out an examination of the rings along the entire periphery thereof with the examination device being stationary.

12. Device according to claim 10, **characterised in that** the rollers (14, 15) are arranged on a lever (11, 12), respectively, which can be introduced into the guiding path, the levers being able to be actuated in a synchronous manner.

13. Device according to claim 12, **characterised in that** the levers are arranged in such a manner that the rollers which are secured thereto are located below the guiding path in the idle state, and **in that** the levers (11, 12) can be moved with the rollers (14, 15) in the guiding path into an operating position, as soon as a ring is located above the roller pair, the rollers being able to be moved apart parallel with the guiding path direction with the movement of the levers (11, 12) into the guiding path in order to examine the rings in the extended state in the operating position.

14. Device according to claim 13, **characterised in that** the levers (11, 12) at whose ends a roller (14, 15) is located, respectively, are supported in a mirror-symmetrical manner relative to each other, the rollers which have the same diameter being located in the idle position of the levers with an axial spacing relative to each other which is smaller than the inner diameter of a ring to be examined minus the diameter of the rollers, and **in that**, when the levers are pivoted upwards, a ring which is located above the roller pair is detected by the roller pair and extended into the operating position when the levers are pivoted further upwards.

15. Device according to claim 14, **characterised in that** the rollers have a conical outer structure which is adapted to the shape of the cross-section of the rings to be examined.

16. Device according to claim 14, **characterised in that** the levers each have a guiding stop (19, 20) for carrying a ring during the pivoting of the levers before the ring is detected by the outer structure of the rollers.

17. Device according to any one of the preceding claims 10 to 16, **characterised in that** a discharge device (13) for separating rings which are found to be defective by the examination device is associated with the guiding path downstream of the levers.

18. Device according to any one of the preceding claims 10 to 17, **characterised in that** a stop device (10) for individually separating the rings which are supplied one after the other to the examination device is associated with the guiding path in an upstream direction.

## Revendications

1. Procédé pour contrôler l'absence de défauts sur des bagues flexibles en caoutchouc ou en matière plastique, en particulier sur des joints d'étanchéité pour canalisations, selon lequel pendant le contrôle on fait passer les bagues (5-9) individuellement devant un dispositif de contrôle optique, les bagues étant étirées mécaniquement, **caractérisé en ce que** pour le contrôle, les bagues que l'on fait passer devant le dispositif de contrôle, sur une bande de guidage (2, 3), sont soulevées de la bande de guidage (2, 3) et étirées par deux éléments d'étirement aptes à être amenés dans le plan des bagues et à être éloignés l'un de l'autre, les éléments d'étirement (14, 15) étant constitués par des rouleaux (14, 15) et le contrôle des bagues se faisant dans la zone des lignes tangentes qui relient les rouleaux.

2. Procédé selon la revendication 1, **caractérisé en ce que** l'un au moins des rouleaux est entraîné et **en ce que** le contrôle des bagues est effectué pendant que les bagues roulent sur les rouleaux.

3. Procédé selon la revendication 1, **caractérisé en ce que** deux premiers éléments d'étirement sont aptes à être éloignés l'un de l'autre dans un premier sens d'étirement et **en ce qu'**il est prévu deux seconds éléments d'étirement qui sont mobiles transversalement par rapport au premier sens d'étirement de telle sorte que lors des étirements successifs dans les premier et second sens d'étirement, toute la circonférence des bagues puisse être contrôlée.

4. Procédé selon la revendication 1, **caractérisé en ce que** le contrôle des bagues se fait grâce à une comparaison optique d'une bague à contrôler avec un modèle original sans défaut.

5. Procédé selon la revendication 1, **caractérisé en ce que** le contrôle des bagues se fait grâce à la constatation de l'apparition de lumière parasite à des endroits défectueux d'une bague.

6. Procédé selon l'une des revendications précédentes, **caractérisé en ce que** le dispositif de contrôle dirige un faisceau laser vers les bagues en caoutchouc ou en matière plastique et **en ce que** les coordonnées du point de réflexion du faisceau laser sont relevées et analysées.

7. Procédé selon la revendication 6, **caractérisé en ce que** le faisceau laser est guidé sous la forme d'un faisceau linéaire transversalement sur les bagues en caoutchouc ou en matière plastique et **en ce que** le faisceau laser réfléchi est détecté et est mis en mémoire et/ou représenté sous forme de reproduction du contour de surface desdites bagues en caoutchouc ou en matière plastique.

8. Procédé selon la revendication 6 ou 7,
**caractérisé en ce qu'**un écart entre les coordonnées du point de réflexion et une valeur théorique prédéfinie déclenche un signal de commande qui est utilisé pour éliminer la bague en caoutchouc ou en matière plastique détectée en conséquence.

9. Procédé selon la revendication 1, **caractérisé en ce que** pendant le contrôle, les bagues sont étirées de 10-30 % sur leur circonférence.

10. Dispositif pour contrôler l'absence de défauts sur des bagues flexibles en caoutchouc ou en matière plastique, en particulier sur des joints d'étanchéité pour canalisations, étant précisé qu'on fait passer les bagues en caoutchouc ou en matière plastique (5-9) individuellement devant un dispositif de contrôle optique qui détecte par voie optique les caractéristiques d'une bague en caoutchouc ou en matière plastique, les bagues étant étirées mécaniquement dans le sens longitudinal, **caractérisé en ce que** les bagues sont guidées sur une bande de guidage (2, 3), **en ce qu'**au moins deux éléments d'étirement aptes à être introduits dans la trajectoire des bagues sont associés à la bande de guidage (2, 3) et **en ce que** les éléments d'étirement sont constitués par des rouleaux (14, 15) qui sont aptes à être introduits, de la bande de guidage, dans la zone intérieure d'une bague et à être éloignés l'un de l'autre de telle sorte que les bagues sont soulevées de la bande de guidage et sont étirées dans le sens longitudinal suivant un degré défini, le dispositif de contrôle détectant par voie optique les caractéristiques des bagues à l'état étiré, afin de constater les défauts de la bague.

11. Dispositif selon la revendication 10, **caractérisé en ce qu'**au moins un rouleau des éléments d'étirement est entraîné pendant le contrôle des bagues afin d'effectuer avec le dispositif de contrôle à l'arrêt un contrôle des bagues sur toute leur circonférence.

12. Dispositif selon la revendication 10, **caractérisé en ce que** les rouleaux (14, 15) sont disposés chacun sur un levier (11, 12) apte à être introduit dans la bande de guidage, les leviers étant aptes à être actionnés de manière synchrone.

13. Dispositif selon la revendication 12, **caractérisé en ce que** les leviers sont disposés de telle sorte que les rouleaux fixés sur eux se trouvent au-dessous de la bande de guidage, en position de repos, et **en ce que** les leviers (11, 12) sont aptes à être amenés avec les rouleaux (14, 15) dans la bande de guidage, en position de travail, dès qu'une bague se trouve sur la paire de rouleaux, étant précisé qu'avec l'amenée des leviers (11, 12) dans la bande de guidage, les rouleaux sont éloignés l'un de l'autre parallèlement au sens de la bande de guidage afin de contrôler les bagues à l'état étiré, dans la position de travail.

14. Dispositif selon la revendication 13, **caractérisé en ce que** les leviers (11, 12) aux extrémités desquels se trouvent des rouleaux respectifs (14, 15) sont montés en miroir, les rouleaux pourvus de diamètres égaux étant séparés par une distance entre-axes, dans la position de repos des leviers, qui est plus petite que le diamètre intérieur d'une bague à contrôler, moins le diamètre des rouleaux, et **en ce que** lorsque les leviers sont soulevés par pivotement, une bague qui se trouve sur la paire de rouleaux est saisie par celle-ci et est étirée lors de la poursuite du soulèvement des leviers jusqu'à la position de travail.

15. Dispositif selon la revendication 14, **caractérisé en ce que** les rouleaux présentent une structure extérieure conique qui est adaptée à la forme de section transversale des bagues à contrôler.

16. Dispositif selon la revendication 14, **caractérisé en ce que** les leviers présentent chacun une butée de guidage (19, 20) pour entraîner une bague pendant le pivotement des leviers, avant que la bague ne soit saisie par la structure extérieure.

17. Dispositif selon l'une des revendications 10 à 16, **caractérisé en ce qu'**il est prévu en aval des leviers, associé à la bande de guidage, un dispositif d'éjection (13) pour éliminer les bagues qui ont été jugées défectueuses par le dispositif de contrôle.

18. Dispositif selon l'une des revendications précédentes 10 à 17, **caractérisé en ce qu'**il est prévu en amont, associé à la bande de guidage, un dispositif d'arrêt (10) pour séparer les bagues amenées successivement dans le dispositif de contrôle.
